# EUROPEAN PATENT APPLICATION

(11) **EP 1 510 599 A2**
(43) Date of publication of application: **02.03.2005**
(21) Application number: 04016511.0
(22) Date of filing: 14.07.2004
(51) Int. Cl.: C25D 1/22

(54) **Method for manufacturing stamper, stamper and optical recording medium**

(30) Priority: 01.09.2003 JP 2003309174
(71) Applicant: MATSUSHITA ELECTRIC INDUSTRIAL CO., LTD., Kadoma-shi, Osaka 571-8501 (JP)
(72) Inventor: Kawaguchi, Yuuko, Ibaraki city Osaka 567-0046 (JP); Tomiyama, Morio, Ikoma city Nara 630-0136 (JP)
(74) Representative: Eisenführ, Speiser & Partner

(57) **Abstract**

When producing a second stamper by forming a nickel electroformed film on a father stamper having patterns of pits and lands, defects appear on the second stamper during the stage of separating the second stamper from the father stamper. The object of the present invention is to decrease these defects. A method for manufacturing a stamper comprises performing a plasma surface treatment on a surface of a father stamper 106 having patterns of pits and lands, forming a nickel electroformed film (II) 107 on the surface of the father stamper 106, and separating the nickel electroformed film (II) 107 from the father stamper 106 so as to form a mother stamper 108.

## Description

### BACKGROUND OF THE INVENTION

### 1. Field of the Invention

The present invention relates to a method for manufacturing a stamper for disk-shaped optical disks used to reproduce information, a stamper, and an optical recording medium.

### 2. Description of the Prior Art

Optical recording media that record and reproduce information upon application of an optical beam are widely used, and increases in recording density are expected in the future.

Recently, various optical disks have been developed which can reproduce many images and large amounts of speech data and digital data. Research has been directed toward making disks with a higher recording density.

Conventional stampers which are used to form optical recording media which record and reproduce information by optical means such as an optical laser are known. An optical recording media tracking groove, and patterns of pits and lands corresponding to information pits and the like, are formed on the optical recording media stamper. The optical recording media groove portion is formed by transcribing the patterns of pits and lands to a thermoplastic resin, for example, a polycarbonate resin.

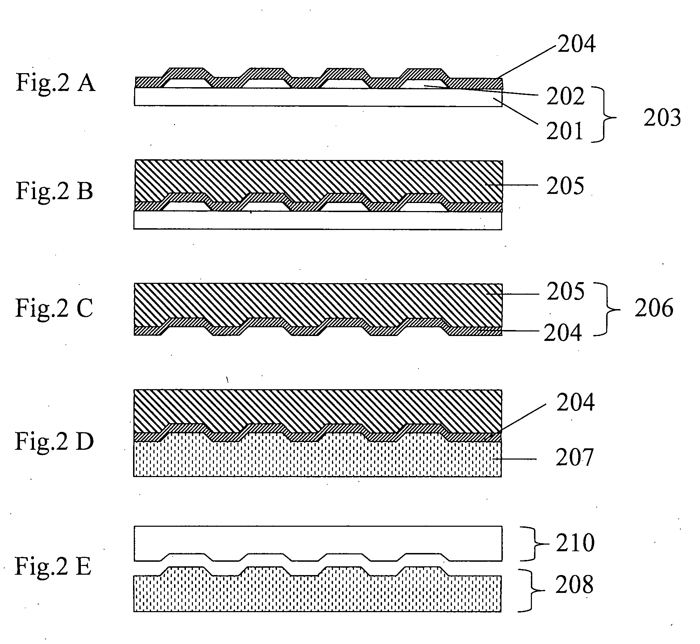

Fig. 2 shows a conventional manufacturing process for a stamper. As shown in the figure, in the conventional method, a conductive film 204 is formed by performing a conductive process in which nickel is sputtered on the surface of the patterns of pits and lands 202 that are formed on a glass substrate 201 included in a master disk 203 (Fig. 2A). After the process, an electroformed film (I) 205 is formed by electroforming nickel on the conductive film 204 (Fig. 2B). Next, the conductive film 204 and the electroformed film (I) 205 are separated as a unitary member from the master disk 203 so as to produce a father stamper 206 (Fig. 2C). In practice, because several substrates having patterns of pits and lands will be produced, an electroformed film (II) 207 is formed by performing electroforming on the surface of the father stamper 206 (Fig. 2D). Then, a mother stamper 208 will be achieved by separating the electroformed film (II) 207 from the father stamper 206 (Fig. 2E). By applying a method such as injection molding to the mother stamper 208, the substrate of an optical disk 210 can be mass produced. In the above-mentioned method of manufacturing the stamper, nickel is used as a material for the conductive film and the electroformed film.

One problem in the manufacturing process described above is that, when separating the electroformed film (II) 207 from the father stamper 206 during the electroforming process to form the film (II) 207, the film (II) 207 may become integral with the conductive film 204 and cannot be separated from each other. This is because the electroformed film (II) 207 is formed by electroforming nickel on the surface of the conductive film 204 which also contains nickel itself, and this means both the film (II) 207 and the conductive film 204 are composed of the same metal.

To resolve these problems, methods have been proposed such as:
1) applying an oxidation process using hypohalous acid to a surface of the nickel film of the conductive film 204 (see Japanese unexamined patent publication JP54-40239); and
2) applying an oxygen plasma process to a surface of the nickel film of the conductive film 204 (see Japanese unexamined patent publication JP59-173288).

The two methods mentioned above include an oxidation process on the surface of the nickel film, but the following problems (1) - (4) will be produced thereby:
(1) The film formation rate of the electroformed film (II) 207 will be slow because of a decrease in the electrical conductivity of the nickel film;
(2) If the surface of the nickel film is not formed uniformly after the oxidation process, the thickness of a produced stamper will vary because the film formation rate of the electroformed film (II) 207 will fluctuate over the surface;
(3) When the electroformed film (II) 207 is separated from the nickel film on the conductive film 204, a portion of the film (II) 207 will remain on the surface of the nickel film as residue because the surface of the nickel film is not formed uniformly after the oxidation process; and
(4) Liquid waste of the oxidation process in problem (1) will cause environmental problems.

### SUMMARY OF THE INVENTION

It is an object of the present invention to propose an alternative method for the above-mentioned oxidation process, and to provide a stamper manufacturing method which can reduce defects on a stamper produced by separating a mother stamper from a father stamper to a minimum.

A method for manufacturing a stamper according to the present invention includes the steps of performing a plasma surface treatment on a surface of a father stamper having patterns of pits and lands, forming a nickel electroformed film on the surface of the father stamper, and forming a second stamper by separating the nickel electroformed film from the father stamper.

In this method, a nickel oxidation film on the surface of the father stamper is eliminated by the plasma surface treatment, and the flatness and smoothness of the surface of the father stamper improves.

By using this father stamper having improved flatness and smoothness when forming the electroformed film, the separability between the father stamper and the electroformed film improves.

Preferably, Ar gas is used during the plasma surface treatment, because using Ar gas resolves the conventional problems caused by use of oxygen gas.

Preferably, electric power from a RF power source for the plasma surface treatment is within a range between 50W and 500W. In this range, surface roughness of the father stamper is reduced, and as a result, the separability between the father stamper and the electroformed film is improved.

A contact angle between the surface of the father stamper 106 and water on the surface thereof after performing the plasma surface treatment is smaller by 20 degrees or more compared to the contact angle before the plasma surface treatment. In this case, surface roughness of the father stamper is reduced, and as a result, the separability between the father stamper and the electroformed film is improved.

The manufacturing process may also comprise the step of supplying water to the surface of the father stamper after performing the plasma surface treatment and before forming the electroformed film. The water supply step begins within 30 minutes after performing the plasma surface treatment. This is because it is necessary to form a film of nickel hydroxide on the surface of the father stamper before nickel oxide can be formed.

The water supply step is performed by immersing the father stamper in water. In addition, the water supply may be performed by slowly introducing vapor into the chamber in which the plasma surface treatment is performed on the surface of the father stamper.

The manufacturing process may also comprise forming a film on the surface of the father stamper in which the main component is nickel hydroxide. This film is made after performing the plasma surface treatment, and before forming the electroformed film. This is because the separability between the father stamper and the electroformed film is improved by forming the nickel hydroxide between the stamper and the film.

According to each of the above-mentioned manufacturing methods, a stamper with fewer defects is produced.

Also, by using the stamper, an optical information medium having a better signal property than that of a conventional medium is produced.

As described above, by eliminating a nickel oxidation film from the surface of a father stamper having patterns of pits and lands, the separability between the father stamper and a mother stamper formed by electroforming can be improved, thereby reducing defects in the mother stamper.

### BRIEF DESCRIPTION OF THE DRAWINGS

Fig. 1 is a stamper manufacturing method according to the present invention; and
Fig. 2 is a conventional stamper manufacturing method.

### DESCRIPTION OF THE PREFERRED EMBODIMENTS

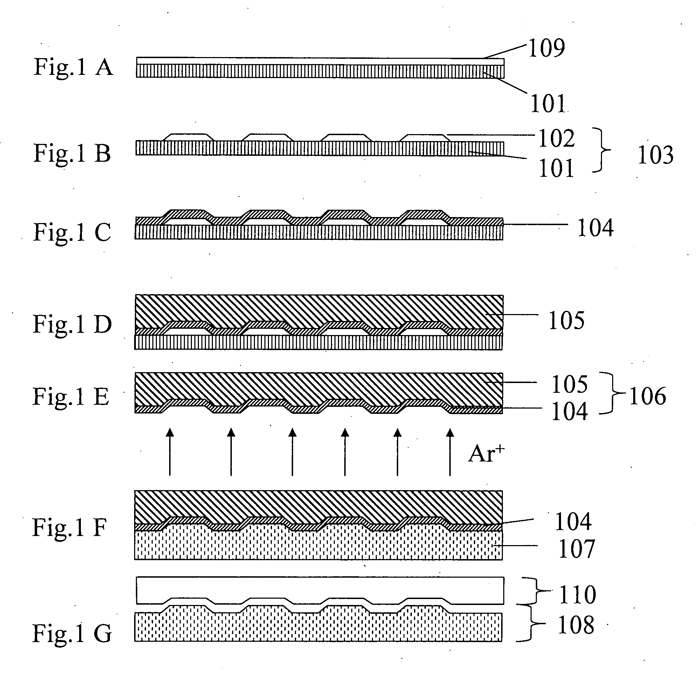

Hereinafter, embodiments of the present invention will be explained with reference to Fig. 1.

As shown in Fig. 1, the invention relates to a method for manufacturing a stamper to produce an optical disk.

Fig. 1A shows a glass substrate 101 onto which a photoresist is deposited. The process of forming the substrate 101 with the photoresist will now be explained. First, the glass substrate 101, having a diameter of 200nm and a thickness of 6mm and with its surface polished, is set on a turn table of a spin coating device. Then, by depositing a photoresist on the polished surface of the glass substrate 101, a photoresist layer 109 is formed having a thickness of about 28µm.

Fig. 1B shows a master disk 103 consisting of the glass substrate 101 on which patterns of pits and lands 102 have been formed by exposure and development processes. The process of forming the master disk 103 will now be explained. Here, an optical laser with 250 nm wavelength converged by an object lens is applied to the photoresist layer 109, and a groove having a track pitch of 0.32 µm and a width of 0.15 µm is formed on the area of the photoresist layer 109 that is exposed to the laser (herein called the exposed area). The glass substrate 101 and the photoresist layer 109 including the exposed area is transferred to a development device. Then, the photoresist layer 109 is developed using a developing solution, and the solution is washed away with purified water. Here, only the exposed area of the photoresist layer 109 is eliminated during the exposure process, and the non-exposed area of the photoresist layer 109 remains. The glass substrate 101 has only the non-exposed area after the development process and the desired pattern of pits and lands on the father stamper 106 is eliminated. The process described above is an example of using a positive photoresist, however, a negative photoresist may also be available.

Fig. 1 C shows the master disk 103 with a conductive film 104. The process of forming the conductive film 104 on the master disk 103 will now be explained. The nickel conductive film 104 is formed to a thickness of 20nm on the master disk 103 using a sputtering method.

Fig. 1D shows the master disk 103 on which an electroformed film (I) 105 is electroformed. The process of electroforming will now be explained. Here, the glass substrate 101 having the conductive film 104 is set on a negative electrode system of a electroforming device (not shown) and then, the nickel electroforming is performed on the surface of the conductive film 104. In this way, the electroformed film (I) 105 in which the patterns of pits and lands 102 have been transcribed is formed.

When the electroformed film (I) 105 has a thickness of 0.3 mm, the nickel electroforming is finished and the glass substrate 101 is detached from the negative electrode system of the electroforming device. Then, the electroformed film (I) 105 and the conductive film 104 are separated from the master disk 103 in a unitary state so as to produce a father stamper 106. Note that the contact angle between the surface of the father stamper 106 (i.e. the side of the father stamper 106 having the surface of the conductive film 104) and water on the surface thereof will be measured before performing an etching step (described later) using a measuring instrument for the contact angle, and the result should be recorded (the contact angle may be 50 degrees, for example).

Fig. 1E shows the process of eliminating the nickel oxidation film by performing the plasma surface treatment on the surface of the father stamper 106 (the side of the surface of the conductive film 104). Here, the father stamper 106 is inserted in a parallel plate etching device (not shown), and the device is evacuated using a cryopump or the like. At this time, assume the ultimate vacuum is 3 × 10⁻⁴ (Pa). Note that it is preferable for the ultimate vacuum before introducing etching gas to be 1 × 10⁻³ (Pa) or below. After that, while pumping Ar as the etching gas into the device at the flow rate of 100 sccm, a vacuum exhaust is performed, and the pressure inside of the device is maintained at 10 (Pa). Then, the voltage is increased to 100W, and the etching is performed for 90 sec. Three minutes after the etching, the father stamper 106 is rinsed with purified water for five minutes. At this time, in the same way as described above, a contact angle between the surface of the father stamper 106 and water on the surface thereof is measured using a measuring instrument for the contact angle. Here, assume the contact angle between the surface of the father stamper and water on the surface thereof is decreased by 20 degrees or more after etching has been performed. For example, when the contact angle before the etching is 50 degrees, the angle after the etching may be adjusted to 15 degrees. When the stamper is immersed in purified water within 30 minutes after performing the plasma surface treatment, a film in which the main component thereof is nickel hydroxide is formed uniformly on the surface of the father stamper 106.

Fig. 1F shows the father stamper 106 on which a film (II) 107 is electroformed. The process of forming the electroformed film (II) 107 will now be explained. Here, the father stamper 106 after the etching is set on a negative electrode system of an electroforming device and then, the electroformed film (II) 107 is formed (the process of forming an electroformed film). When the electroformed film (II) 107 has a thickness of 0.3mm, the nickel electroforming is finished and the glass substrate 101 is detached from the negative electrode system included in the electroforming device. Next, the electroformed film (II) 107 is separated from the father stamper 106 (the separation process).

According to the embodiments described above, the film (II) 107 can be cleanly separated from the father stamper 106 so as to produce a mother stamper 108 (Fig. 1 G) without defects or residue. Further, from this mother stamper 108, optical recording media such as an optical disk 110 is produced using an injection molding machine.

Note that as shown in Fig. 1F, if the electroformed film (II) 107 is formed on the conductive film 104, metallic bonds occur because both the film 104 and the film (II) 107 are nickel metal. However, as shown in Fig. 1G, in order to produce the mother stamper 108, the electroformed film (II) 107 must be separated from the conductive film 104.

As mentioned above, by applying the etching on the father stamper using Ar gas, the improvement in separability between the father stamper and the mother stamper is confirmed. The reason for the improvement is thought to be as described below.

It is clear from performing a component analysis that if a father stamper is exposed to the atmosphere after forming a nickel conductive film, both nickel oxide and nickel hydroxide will be formed on the surface of the conductive film. Because there is little nickel oxide and nickel hydroxide produced with the atmosphere, a method has been proposed in Japanese unexamined patent publication JP59-173288 that forms nickel oxide on the conductive film by performing ashing by actively using oxygen. However, usually after performing the method, other processes are performed such as a cleaning process using purified water, and a process of immersing the father stamper in a solution like nickel sulfamate in order to form the nickel electroformed film. Because of these processes, the nickel hydroxide is usually formed on the father stamper. Forming the nickel hydroxide is easily affected by factors such as humidity of the atmosphere, and leaving the father stamper in the atmosphere, resulting in the nickel hydroxide not being formed uniformly on the father stamper.

As mentioned above, the ratio of nickel oxide to nickel hydroxide on the father stamper is locally different, and the separability between the two is different. Therefore, the separability between the electroformed film (II) and the conductive film becomes irregular, which may cause defects on the mother stamper.

In the present invention, by performing the plasma surface treatment on the surface of the father stamper (the side of the surface of the conductive film 104), it is possible to eliminate the nickel oxide and the nickel hydroxide formed on the surface. Because the plasma surface treatment is performed in a vacuum, pure nickel is exposed on the surface by eliminating the nickel oxide and the nickel hydroxide. It is thought that by immersing the father stamper 106 in purified water within 30 minutes after the plasma surface treatment, the nickel hydroxide can be formed uniformly on the surface.

Moreover, as described later, it is known that hydrophilicity on the surface of the father stamper 106 improves by performing a plasma surface treatment.

However, the improvement cannot be confirmed using devices such as a surface measuring instrument or an interatomic force microscope that can analyze the surface roughness by quantitative analysis, because the plasma surface treatment is performed under low energy conditions.

In contrast, the difference with or without the plasma surface treatment can be quantitatively measured by examining differences of contact angles with respect to water. In this case, the contact angle between the surface of the father stamper 106 and water on the surface thereof after performing the plasma surface treatment is decreased by 20 degrees or more compared to the contact angle before the treatment. The phenomenon in which the contact angle with respect to water becomes smaller indicates that the surface roughness of the father stamper 106 is improved. Therefore, a contact area of the father stamper 106 and the electroformed film (II) 107 can be smaller when electroforming after plasma surface treatment, with an improvement in flatness and smoothness, compared to that before the plasma surface treatment. Thus, the separation performance between the father stamper 106 and the electroforming film (II) 107 may also improve even due to the effect of reducing the contact area.

As mentioned before, by etching the surface of the father stamper 106 by plasma surface treatment, the separability between the father stamper 106 and the electroformed film (II) 107 can be improved. It is found that this phenomenon depends on the input power of the etching as explained later. If the input power of the etching is too large, the surface roughness becomes worse. This surface roughness affects the quality of the mother stamper 108. With an optical disk employing a substrate having patterns of pits and lands which is produced from a stamper with such high surface roughness, C/N (carrier to noise ratio) becomes worse because the noise of the reproducing signal component increases during reproduction. On the contrary, if the input power of the etching is too small, the electroformed film (II) 107 cannot be separated from the father stamper 106, because improvement in flatness and smoothness by performing the plasma surface treatment cannot be expected.

### (Example 1)

### (1)

Experiments used to ascertain the etching conditions will be described with regard to examination of the dependence of input power during etching. Note that because time dependence during the etching is not important, it is assumed to be constant at 90 seconds.

The results are shown in Table 1.

**[Table.1]**

| Input Power of the Etching (W) | Separability | Noise (dBm) |
|---|---|---|
| 10 | Bad | N/A |
| 30 | Bad | N/A |
| 50 | Good | -71 |
| 200 | Good | -73 |
| 500 | Good | -72 |
| 600 | Good | -68 |
| 800 | Good | -65 |
| 1000 | Good | -58 |

In Table 1, the term "Bad" in the separability column indicates etching conditions in which the electroformed film (II) 107 could not be separated from the father stamper 106, or conditions in which defects were produced on the electroformed film (II) 107. The term "Good" in the same column indicates conditions in which a mother stamper 108 without defects was produced.

In addition, the mother stamper 108 is set on an injection molding machine, and then a substrate for an optical recording medium with a thickness of 1.1 mm is produced by transcribing patterns of the mother stamper 108 to a polycarbonate resin. The surface roughness of the mother stamper 108 is measured as noise on the optical information medium after transcription to the polycarbonate substrate, and thus it is necessary to measure the level of noise of the polycarbonate substrate. An aluminum reflection film is formed to a thickness of 20nm on the information area side on the polycarbonate substrate, and further, a sheet containing polycarbonate with a thickness of 0.1 mm is formed on the reflection film. The substrate is set on an information reproducing device, and the level of noise is measured. In this information reproducing device, an optical system is used which employs a wavelength of 405 nm and an object lens with a numerical aperture of 0.85. Light for reproducing information is applied to the substrate from the side of the polycarbonate sheet with a thickness of 0.1 mm. By rotating the optical information medium with a linear velocity of 5.0 m/s, the output signal is set into a spectral analyzer and the level of noise in the 3 MHz broadband was investigated. In this zone, when the level of noise is -70dBm or below, the noise does not affect the reproducing signals. Therefore, to judge the surface properties, it is preferable that the noise is -70dBm or below. From this examination, input power of the etching should be within the range of 50W and 500W.

### (2)

To investigate the change of flatness and smoothness of the surface before and after etching, the contact angle between the father stamper 106 and water on the surface thereof is measured before and after etching, using a contact angle measurement instrument. From the results, it was found that, before and after etching, as the angle changed, the separability of the electroformed film (II) 107 depends largely on the contact angle with respect to water on the surface of the father stamper 106. On the other hand, because the contact angle with respect to water on the surface of the father stamper 106 can be controlled by manipulating the pressure of Ar gas and voltage applied when performing the etching, stampers were prepared that have different contact angles with respect to water on the surface of the father stamper 106 before and after etching. Then the relation between the change of the contact angle before and after etching and the electroformed film (II) 107 was investigated. The results are shown in Table 2.

**[Table 2]**

| Difference of Contact Angle before and after Etching | Separability |
|---|---|
| 0 | Bad |
| 5 | Bad |
| 10 | Bad |
| 15 | Bad |
| 20 | Good |
| 25 | Good |
| 30 | Good |

Similar to Table 1, the separability column shows the separability of the electroformed film (II) 107 and the existence of defects. From the results, a decrease in the degree of the contact angle with respect to water on the surface of the father stamper 106 should be 20 degrees or more.

### (Example 2)

### (1)

In Example 2, a mother stamper 108 will be formed via the same steps and procedures as described above. Fig. 1 will be used to describe this.

It is thought that there is a relationship between the separability of the mother stamper 108 and the existence of defects on the stamper and whether it is possible to form nickel hydroxide uniformly on the father stamper 106. To form the hydroxide uniformly on the stamper, the stamper needs to be immersed in water quickly after the plasma surface treatment. On the contrary, after the treatment, if the father stamper 106 is left in the atmosphere, both nickel oxide and nickel hydroxide are produced. Because the ratios of nickel oxide to nickel hydroxide are different locally, and the separabilities of these materials are also different, then the difference of the separability may occur locally and the possibility of defects remaining on the mother stamper 108 increases.

In Table 3, the relationship between the time that the father stamper 106 is left in the atmosphere after the plasma surface treatment and the existence of defects (separability) on the mother stamper 108 is described.

**[Table. 3]**

| Time Left in Atmosphere (min.) | Separability |
|---|---|
| 1 | Good |
| 10 | Good |
| 20 | Good |
| 30 | Good |
| 31 | Bad |
| 40 | Bad |

When performing the plasma surface treatment on the father stamper 106, nickel oxide and nickel hydroxide are eliminated and pure nickel is exposed. Therefore, if the father stamper 106 with pure nickel on the surface is left in the atmosphere for over 30 minutes, both nickel oxide and nickel hydroxide are formed, then residue will be produced on the mother stamper 108 and the defects will remain on the surface during the separation process, because the separability is not uniform. Therefore, it is preferable that the time that the father stamper 106 is left in the atmosphere after the plasma surface treatment is 30 minutes or less.

### (2)

In this example, the mother stamper 108 was formed using the same process as described above, without immersing the stamper in purified water after the plasma surface treatment. Instead of the immersing process, the pressure inside the chamber used for the plasma surface treatment of the father stamper 106 is returned to atmospheric pressure by applying vapor after the plasma surface treatment. According to this process, on the surface of the father stamper 106, nickel hydroxide of very high purity is formed. Note that it is also preferable that the process is performed within 30 minutes after the plasma treatment.

The method for manufacturing a stamper of this invention is useful as a stamper production method for optical recording media and the like. In addition, it may be applied to a manufacturing method of a stamper produced by electroforming

## Claims

1. A method for manufacturing a stamper, comprising the steps of:
performing plasma surface treatment on a surface of a father stamper having patterns of pits and lands;
forming a nickel electroformed film on the surface of the father stamper; and
forming a second stamper by separating the nickel electroformed film from the father stamper.

2. The method of claim 1, wherein at least Ar gas is used for the plasma surface treatment.

3. The method of claim 1 or 2, wherein the electric power of a RF power source for the plasma surface treatment is within a range between 50W and 500W.

4. The method of any claims of 1 to 3, wherein a contact angle between the surface of the father stamper and water on the surface of the father stamper after the plasma surface treatment is smaller by 20 degrees or more compared to a contact angle between the surface of the father stamper and water on the surface of the father stamper before the plasma surface treatment.

5. The method of any claims of 1 to 4, further comprising the step of supplying water to the surface of the father stamper after performing the plasma surface treatment and before forming the electroformed film.

6. The method of claim 5, wherein the water supply step begins within 30 minutes after the plasma surface treatment.

7. The method of claim 5 or 6, wherein the water supply step is performed by immersing the father stamper in water.

8. The method of claim 5 or 6, wherein the plasma surface treatment is performed in a chamber, and the water supply step is performed by introducing water vapor into the chamber.

9. The method of any claims of 1 to 4, further comprising the step of forming a film mainly composed of nickel hydroxide on the surface of the father stamper after performing the plasma surface treatment and before forming the electroformed film.

10. A stamper produced by the manufacturing method of any claims of 1 to 9.

11. An optical recording medium produced by the stamper of claim 10.
